(19) **Europäisches Patentamt**

**European Patent Office**

**Office européen des brevets**

(11) **EP 0 945 601 B1**

(12) **FASCICULE DE BREVET EUROPEEN**

(45) Date de publication et mention
de la délivrance du brevet:
**21.05.2003 Bulletin 2003/21**

(51) Int Cl.[7]: **F01N 7/08**, F01N 3/02

(21) Numéro de dépôt: **99400576.7**

(22) Date de dépôt: **10.03.1999**

(54) **Dispositif de dilution uniforme des gaz d'échappement d'un véhicule militaire**

Vorrichtung zum gleichmässigen Verdünnen von Abgas von einem Militärfahrzeug

Device for uniformly diluting exhaust gas from a military vehicle

(84) Etats contractants désignés:
**DE GB IT**

(30) Priorité: **26.03.1998 FR 9803720**

(43) Date de publication de la demande:
**29.09.1999 Bulletin 1999/39**

(73) Titulaire: **GIAT INDUSTRIES**
**78000 Versailles (FR)**

(72) Inventeurs:
• **Brun, Michel**
**78370 Maurepas (FR)**

• **Cottet-Dumoulin, Jean**
**95130 Franconville (FR)**
• **Carlier, Sylvain**
**78280 Guyancourt (FR)**
• **Fontaine, Fabrice**
**78000 Versailles (FR)**

(74) Mandataire: **Célanie, Christian**
**Cabinet Célanie,**
**13 route de la Minière,**
**BP 214**
**78002 Versailles Cedex (FR)**

(56) Documents cités:
**US-A- 2 112 534        US-A- 4 864 819**

## Description

Le secteur technique de la présente invention est celui des dispositifs destinés à réduire les signatures visible et infrarouge des véhicules de combat au niveau de leur gaz d'échappement.

Il est bien connu que l'échappement d'un véhicule militaire constitue une zone relativement caractéristique de ses signatures visible et infrarouge. Cette zone est de nos jours de plus en plus appréhendée en raison des performances croissantes des capteurs infrarouge que l'on associe à des détecteurs radar et acoustiques. Il est donc aisé non seulement de détecter un véhicule mais de l'identifier. Il faut donc réduire les signatures visible et infrarouge des véhicules.

Le brevet US-A-2 112 534 décrit un système de diffusion des gaz d'échappement d'une locomotive afin de les éloigner de la cabine et du moteur. Une enceinte reçoit un conduit relié à l'échappement, qui est muni de perforations pour assurer un débit croissant de l'aval vers l'amont en combinaison avec un ventilateur placé dans un compartiment pour évacuer vers le haut les gaz. Il n'est pas question de réduire la signature radar ou infrarouge de la locomotive.

Le brevet US-A- 4 864 819 décrit un système permettant lui par contre de réduire la signature infrarouge d'un véhicule militaire complètement intégré dans le véhicule lui-même. Cette structure est spécialement étudiée pour un engin équipé d'une turbine à gaz pour assurer une fonction de protection du moteur contre les agressions pour empêcher une dégradation du moteur et une fonction de refroidissement non pas des gaz mais des plaques de protection.

Le but de l'invention est justement d'améliorer la furtivité d'un véhicule militaire, un char par exemple, en réalisant un masquage de la zone d'émission.

L'invention a donc pour objet un dispositif de dilution des gaz de l'échappement d'un d'un moteur d'un véhicule militaire pour diminuer les signatures visible et infrarouge dudit véhicule, constitué d'un conduit fermé à une extrémité et relié à l'extrémité libre de l'échappement, caractérisé en ce qu'il est muni suivant une génératrice longitudinale de perforations de différents calibres assurant vers l'extérieur un débit de gaz uniforme de l'amont vers l'aval, en ce que le conduit est placé dans une cage ouverte fixée sur le véhicule et ouverte vers le sol, les perforations étant constituées par des grilles perforées appliquées sur des ouvertures du conduit.

Le dispositif comprend des moyens pour amener de l'air extérieur dans la cage.

Les dimensions des perforations sont calculées pour assurer à l'extérieur une équirépartition des gaz d'échappement à leur sortie de l'amont vers l'aval du conduit.

Les perforations délimitent une fente longitudinale.

Les perforations délimitent un ensemble d'ouvertures calibrées séparées par des parties de matière pleine.

Le conduit se présente sous la forme d'un empilement d'éléments tubulaires réunis entre eux, chaque élément tubulaire étant muni de perforations calibrées.

Les perforations sont constituées par des grilles perforées appliquées sur des ouvertures du conduit.

Des moyens de guidage constitués par des persiennes sont fixés au véhicule pour guider l'air extérieur vers le conduit.

La cage est constituée de deux parois latérales fixées de part et d'autre du véhicule, d'une paroi supérieure fixée au véhicule et aux parois latérales, et une paroi souple prolongeant la paroi supérieure fixe vers le sol.

Le conduit est fixé d'un côté à l'extrémité libre de l'échappement et à l'autre extrémité sur une patte de fixation solidaire du châssis du véhicule.

Un tout premier avantage du dispositif selon l'invention réside dans la passivité de celui-ci et dans l'absence de toute modification des performances du moteur du véhicule.

Un tout autre avantage réside dans le fait que la mobilité du véhicule (capacités de franchissement des obstacles et intégration des schnorchels pour passage des gués) n'est pas altérée par l'interposition du dispositif.

Un autre avantage encore de l'invention réside dans le fait que l'adaptation du dispositif à un véhicule ne nécessite pas une refonte de l'échappement, de l'ensemble de ventilation et de la partie voisine du toit du véhicule.

D'autres caractéristiques, avantages et détails de l'invention ressortiront plus clairement à la lecture du complément de description qui va suivre de modes de réalisation donnés à titre d'exemple en relation avec des dessins sur lesquels :

- la figure 1 est une vue générale de l'arrière d'un véhicule militaire montrant l'implantation du dispositif selon l'invention,
- la figure 2 est une vue d'un premier mode de réalisation du conduit,
- les figures 3 à 5 représentent une coupe longitudinale d'autres modes de réalisation du conduit.

Suivant l'invention, on réalise sur le plan physique un mélange homogène en débit et en température des gaz d'échappement avec de l'air prélevé à l'extérieur. Avantageusement, cet air peut provenir de la ventilation du compartiment moteur du véhicule. Sur le plan architectural, on ne procède à aucune modification du véhicule et on peut réaliser le dispositif selon l'invention sous forme d'un kit que l'on assemble à l'arrière du véhicule.

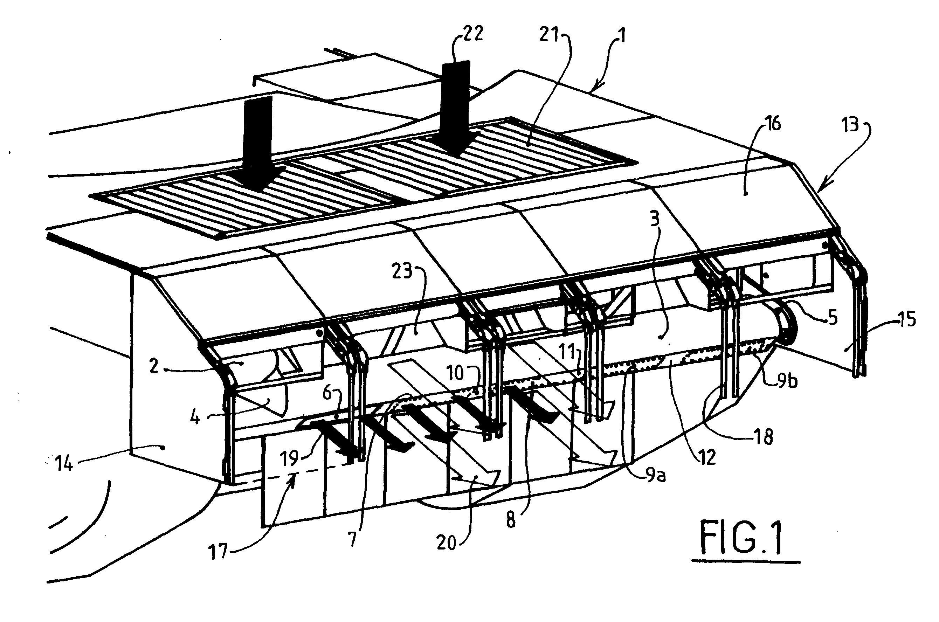

Sur la figure 1, on a représenté la partie arrière d'un véhicule militaire au niveau de laquelle débouche l'échappement 2. Ce dernier est prolongé par un conduit 3 disposé ici de manière sensiblement horizontale par rapport au véhicule. Ce conduit 3 est fixé rigidement au véhicule au niveau de l'échappement par une buse 4 à son extrémité amont et de manière souple par une patte 5 à son extrémité aval. Ce conduit 3 est muni de perforations groupées 6, 7, 8, 9a et 9b séparées par des parties pleines 10, 11 et 12 délimitant ainsi une bande longitudinale. Les perforations 6 à 9 sont prévues de telle manière qu'elles assurent vers l'extérieur un débit de gaz uniforme de l'amont vers l'aval. Ainsi, si on se réfère aux surfaces de vide S6, S7, S8 et S9 constituées par les perforations 6 à 9, on a la relation suivante :

$$S6 > S7 > S8 > S9$$

Dans une variante, il est possible de réaliser les perforations groupées 6 en amont en une partie vide unique.

Pour améliorer l'efficacité de la dilution des gaz d'échappement on peut adjoindre à ce conduit une cage 13 comprenant deux parois latérales 14 et 15 et une paroi supérieure rigide 16. Les deux parois 14 et 15 sont fixées par exemple par soudure sur le châssis du véhicule et la paroi 16 est fixée à la fois sur les parois et sur le véhicule. L'ensemble ainsi réalisé est complété par une paroi souple 17 qui prolonge vers le sol la paroi 16 pour délimiter une cage recevant les gaz d'échappement. Cette paroi souple 17 est fixée sur la paroi 16 par collage par exemple et sur des bras 18 articulés par rapport au véhicule. La cage peut se présenter sous la forme d'un espace unitaire ou bien sous la forme de caissons. Les flèches 19 représentent le flux des gaz d'échappement et leur circulation dans la cage.

Pour améliorer encore l'efficacité de la dilution des gaz d'échappement, il est possible d'introduire dans la cage un flux d'air extérieur suivant les flèches 20. Le flux peut par exemple pénétrer par une grille 21 à l'aide d'un ventilateur non représenté suivant les flèches 22, puis est dirigé par des persiennes 23 dans la cage.

On obtient avec cette structure une équi-répartition des gaz d'échappement et de l'air extérieur sans aucune perturbation du fonctionnement du moteur du véhicule et un refroidissement homogène supplémentaire des gaz d'échappement.

A titre de variante, on peut mettre à profit l'air de ventilation du compartiment moteur du véhicule lorsque ce dernier est équipé de ce système.

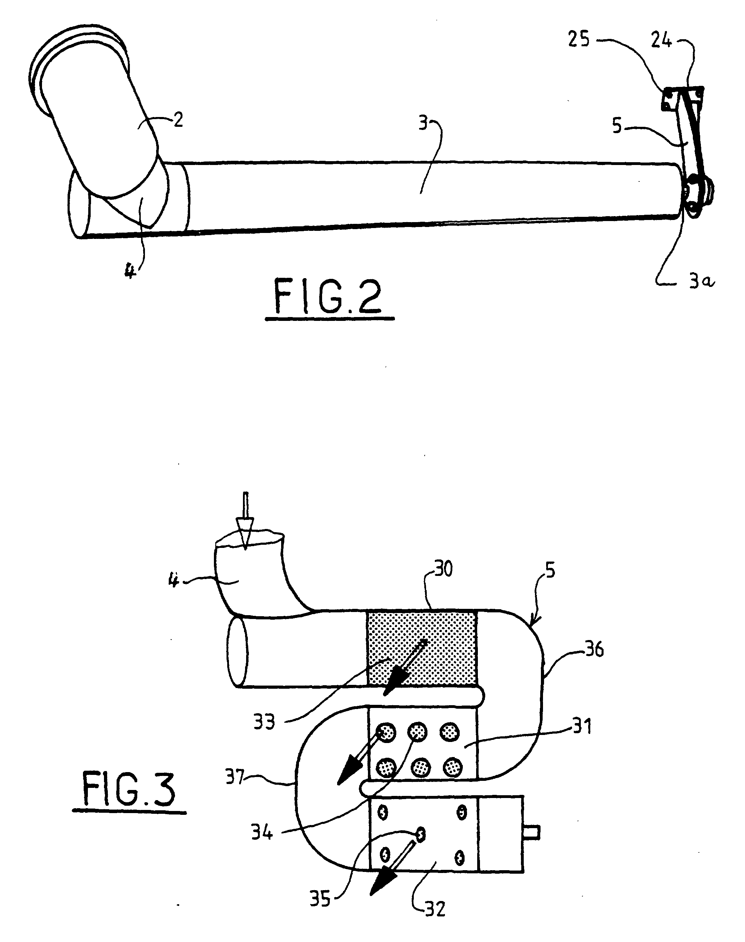

On a représenté à la figure 2 le conduit 3 relié à une extrémité à la sortie de l'échappement 2 par une buse 4. A l'autre extrémité, le conduit 3 est prolongé par un axe 3a qui vient s'engager dans une lumière pratiquée dans la patte 5 laquelle est prolongée par une plaque 24 fixée au châssis par exemple par des vis 25. L'ensemble ainsi constitué est suffisamment rigide pour résister aux contraintes habituellement imposées à un véhicule militaire.

Sur la figure 3, on a représenté une variante de réalisation du conduit 5 sous forme étagée. Ainsi, le conduit 5 comprend ici trois portions tubulaires 30, 31 et 32 munies des perforations groupées 33, 34 et 35, reliées entre elles par des moyens de jonction 36 et 37. La portion 32 est terminée par l'axe 3a.

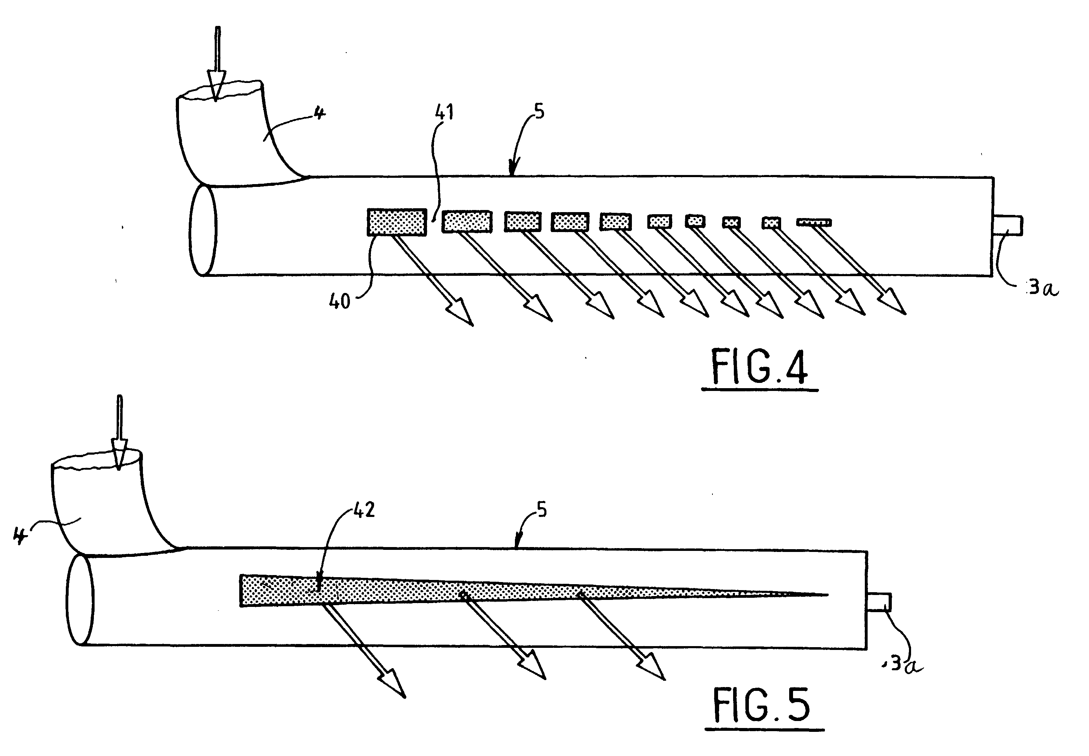

Le conduit 5 représenté sur la figure 4 se présente sous la forme d'un tube dont chaque perforation 40 est séparée de la précédente et/ou de la suivante par une partie 41 en matière pleine. Dans ce mode de réalisation, chaque perforation est unique et individuelle et leurs surfaces sont dans un ordre décroissant de l'amont vers l'aval.

Le conduit 5 représenté sur la figure 5 se présente sous la forme d'un tube dont les perforations constituent une fente 42 par exemple de type triangulaire. Cette fente 42 présente une section diminuant de l'amont vers l'aval.

Avec le dispositif selon l'invention, on obtient un masquage parfait de l'échappement et de l'arrière du véhicule militaire qui devient très difficilement repérable.

## Revendications

1. Dispositif de dilution des gaz de l'échappement d'un d'un moteur d'un véhicule militaire pour diminuer les signatures visible et infrarouge dudit véhicule, constitué d'un conduit (3) fermé à une extrémité et relié à l'extrémité libre de l'échappement (2), **caractérisé en ce qu'**il est muni suivant une génératrice longitudinale de perforations (6, 7, 8, 9a, 9b) de différents calibres assurant vers l'extérieur un débit de gaz uniforme de l'amont vers l'aval, **en ce que** le conduit (3) est placé dans une cage ouverte (13) fixée sur le véhicule et ouverte vers le sol, les perforations étant constituées par des grilles perforées appliquées sur des ouvertures du conduit (3).

2. Dispositif de dilution selon la revendication 1, **caractérisé en ce qu'**il comprend des moyens pour amener de l'air extérieur dans la cage (13).

3. Dispositif de dilution selon la revendication 1 ou 2, **caractérisé en ce que** les perforations délimitent une fente longitudinale (42).

4. Dispositif de dilution selon la revendication 1 ou 2, **caractérisé en ce que** les perforations délimitent un ensemble d'ouvertures (6, 7, 8, 9a, 9b) séparées par des parties (10, 11, 12) de matière pleine.

5. Dispositif de dilution selon la revendication 1 ou 2, **caractérisé en ce que** le conduit (3) se présente sous la forme d'un empilement d'éléments tubulaires (30, 31, 32) réunis entre eux, chaque élément tubulaire étant muni de perforations.

6. Dispositif de dilution selon l'une quelconque des revendications 1 à 5, **caractérisé en ce que** des moyens de guidage constitués par des persiennes (23) sont fixés au véhicule pour guider l'air extérieur vers le conduit(3).

7. Dispositif de dilution selon l'une quelconque des revendications précédentes, **caractérisé en ce que** la cage (13) est constituée de deux parois latérales (14, 15) fixées de part et d'autre du véhicule, d'une paroi supérieure (16) fixée au véhicule et aux parois latérales, et d'une paroi souple (17) prolongeant vers le sol la paroi supérieure fixe.

8. Dispositif de dilution selon l'une quelconque des revendications précédentes, **caractérisé en ce que** le conduit (3) est fixé d'un côté à l'extrémité libre de l'échappement (2) et à l'autre extrémité sur une patte de fixation (5) solidaire du châssis du véhicule.

**Patentansprüche**

1. Vorrichtung zur Verdünnung der Auspuffgase eines Motors eines Militärfahrzeugs, um die Signaturen im sichtbaren und infraroten Bereich des genannten Fahrzeuges zu verringern, die aus einer Leitung (3) gebildet wird, die an einem Ende geschlossen und am freien Ende mit dem Auspuff (2) verbunden ist, **dadurch gekennzeichnet, dass** sie entlang einer longitudinalen Mantellinie mit Lochungen (6, 7, 8, 9a, 9b) von unterschiedlichen Abmessungen versehen ist, um stromaufwärts bis stromabwärts einen gleichmäßigen Durchsatz von Gas nach Außen hin zu gewährleisten, und dass die Leitung (3) in einem offenen Gehäuse (13) angeordnet ist, das am Fahrzeug befestigt und zum Boden hin offen ist, wobei die Lochungen durch Lochgitter gebildet werden, die an den Öffnungen der Leitung (3) angebracht sind.

2. Vorrichtung zur Verdünnung nach Anspruch 1, **dadurch gekennzeichnet, dass** sie Mittel umfasst, um Außenluft in das Gehäuse (13) zu führen.

3. Vorrichtung zur Verdünnung nach Anspruch 1 oder 2, **dadurch gekennzeichnet, dass** die Lochungen einen longitudinalen Schlitz (42) begrenzen.

4. Vorrichtung zur Verdünnung nach Anspruch 1 oder 2, **dadurch gekennzeichnet, dass** die Lochungen durch Abschnitte (10, 11, 12) mit vollem Material eine Gesamtheit von getrennten Öffnungen (6, 7, 8, 9a, 9b) abgrenzen.

5. Vorrichtung zur Verdünnung nach Anspruch 1 oder 2, **dadurch gekennzeichnet, dass** die Leitung (3) sich in der Form einer Schachtelung von ineinander gefügten rohrförmigen Elementen (30, 31, 32) darstellt, wobei jedes rohrförmige Element mit Lochungen versehen ist.

6. Vorrichtung zur Verdünnung nach irgendeinem der Ansprüche 1 bis 5, **dadurch gekennzeichnet, dass** Führungsmittel, die durch Belüftungsschlitze (23) gebildet werden, am Fahrzeug angebracht sind, um die Außenluft zur Leitung (3) hin zu führen.

7. Vorrichtung zur Verdünnung nach irgendeinem der vorgenannten Ansprüche, **dadurch gekennzeichnet, dass** das Gehäuse (13) von zwei beiderseits des Fahrzeuges befestigten seitlichen Wänden (14, 15), einer oberen, am Fahrzeug und an den seitlichen Wänden befestigten Wand (16) und einer elastischen Wand (17), welche die obere feste Wand zum Boden hin verlängert, gebildet wird.

8. Vorrichtung zur Verdünnung nach irgendeinem der vorgenannten Ansprüche, **dadurch gekennzeichnet, dass** die Leitung (3) an einer Seite am freien Ende des Auspuffs (2) und am anderen Ende an einer Befestigungswange (5), die fest mit dem Chassis des Fahrzeuges verbunden ist, befestigt ist.

**Claims**

1. A device to dilute the exhaust gases of the engine of a military vehicle so as to reduce the visible and infrared signatures of said vehicle, constituted by a pipe (3) closed at one end and connected to the free end of the exhaust pipe (2), **characterized in that** it is provided along a longitudinal generating line with perforations (6, 7, 8, 9a, 9b) of different calibres that ensure an even flow of the gases outside from up to downstream, and **in that** the pipe (3) is placed in an open cage (13) fastened onto the vehicle and opened towards the ground, the perforations being constituted by perforated grids applied to the openings of the pipe (3).

2. A dilution device according to Claim 1, **characterized in that** it comprises means to bring air from the outside into the cage (13).

3. A dilution device according to Claims 1 or 2, **characterized in that** the perforations delimit a longitudinal slot.

4. A dilution device according to Claims 1 or 2, **characterized in that** the perforations delimit a set of calibrated openings (6, 7, 8, 9a, 9b) separated by parts (10,11,12) of solid material.

5. A dilution device according to Claims 1 or 2, **char-**

**acterized in that** the pipe (3) is in the shape of a stack of tubular elements (30, 31, 32) joined together, each tubular element being provided with calibrated perforations.

6. A dilution device according to any of Claims 1 to 5, **characterized in that** guiding means constituted by shutters (23) are fastened to the vehicle to guide the air from outside towards the pipe (3).

7. A dilution device according to any one of the above Claims, **characterized in that** the cage (13) is constituted by two side walls (14, 15) fastened on either side of the vehicle, an upper wall (16) fastened to the vehicle and to the side walls, and a flexible wall (17) extending the fixed upper wall groundwards.

8. A dilution device according to any of the above Claims, **characterized in that** the pipe (3) is fastened on one side to the free end of the exhaust pipe (2) and at the other end to a fastening lug (5) integral with the vehicle chassis.

FIG.1

EP 0 945 601 B1

FIG.2

FIG.3

FIG.4

FIG.5